# EUROPÄISCHE PATENTANMELDUNG

(11) **EP 4 779 107 A1**
(43) Veröffentlichungstag der Anmeldung: **22.07.2026**
(21) Anmeldenummer: 25152388.2
(22) Anmeldetag: 16.01.2025
(51) Int. Cl.: E04G 21/32, E04G 7/30, F16B 7/04

(54) **SCHUTZGELÄNDERHALTER**

(71) Anmelder: Albanese, Pino, 8400 Winterthur (CH)
(72) Erfinder: Albanese, Pino, 8400 Winterthur (CH)
(74) Vertreter: Gachnang AG Patentanwälte

(57) **Zusammenfassung**

Der erfindungsgemässe Schutzgeländerhalter (1) umfasst einen Pfosten (2), der beim unteren Ende einen Einsteckbereich (4) zum Einsetzen in das Innere einer Pfostenaufnahme, beim Einsteckbereich (4) ein relativ zum Pfosten (2) bewegbares Eingriffselement (5) und oberhalb des Einsteckbereichs (4) ein relativ zum Pfosten (2) bewegbares Betätigungselement (6) aufweist. Eine Betätigungsbewegung des Betätigungselements (6) macht das Eingriffselement (5) von einer Eingriffslage in eine Freigabelage bewegbar. Die Bewegbarkeit des Eingriffselements (5) ist von einer Eingriffsführung (7) vorgegeben und die Bewegbarkeit des Betätigungselements (6) von einer Betätigungsführung (8). Die Eingriffsführung (7) ist von der Betätigungsführung (8) getrennt ausgebildet und eine Kopplungsvorrichtung (9) macht die Betätigungsbewegung auf die Bewegung des Eingriffselements (5) von der Eingriffslage in die Freigabelage übertragbar.

## Beschreibung

Die Erfindung betrifft einen Schutzgeländerhalter nach dem Oberbegriff von Anspruch 1.

Für provisorische Absturzsicherungen werden Schutzgeländerhalter eingesetzt, welche Halteelemente zum Halten von Absperrelementen aufweisen. Solche Absturzsicherungen werden insbesondere auf Baustellen entlang von erhöhten Bauteilen eingesetzt. Die Schutzgeländerhalter umfassen einen Pfosten, der sich entlang einer Pfostenachse erstreckt und beim unteren Ende einen Einsteckbereich zum Einsetzen in das Innere einer Pfostenaufnahme aufweist. Bei bekannten Schutzgeländerhaltern weist der Pfosten am Einsteckbereich ein relativ zum Pfosten bewegbares Eingriffselement und direkt oberhalb des Einsteckbereichs ein relativ zum Pfosten bewegbares Betätigungselement auf. Das Eingriffselement ist zwischen einer vorstehenden Eingriffslage mit dessen Eingriff in eine Ausnehmung der Pfostenaufnahme und einer zurückgezogenen Freigabelage ohne Eingriff in die Ausnehmung bewegbar. Ein in eine Pfostenaufnahme eingesetzter Pfosten wird vom Eingriffselement in der Pfostenaufnahme festgehalten. Durch eine Betätigung des Betätigungselements ist eine Bewegung des Eingriffselements von der Eingriffslage in die Freigabelage erzielbar, so dass der Pfosten aus der Pfostenaufnahme herausgezogen werden kann.

DE 10 2005 022 316 A1 beschreibt einen rohrförmigen Pfosten eines Schutzgeländerhalters. Beim Einsteckbereich des Pfostens ist im Innern des Pfostens ein Hebel angeordnet, der ein Einrastelement und ein Betätigungselement umfasst. Eine Feder dient im Zusammenspiel mit dem Hebel und dem Pfosten als Führungs- und Vorspanneinrichtung des Hebels. Der Hebel wird von der Feder so vorgespannt, dass das am Hebel ausgebildete Einrastelement und das am Hebel ausgebildete Betätigungselement durch Öffnungen im Pfosten aus diesem vorstehen. Wenn der Pfosten in einer Pfostenaufnahme eingesetzt ist, erstreckt sich das Eingriffselement durch eine Bohrung der Pfostenaufnahme, so dass der Pfosten in der Pfostenaufnahme festgehalten wird. Durch eine Betätigung des direkt oberhalb des Einsteckbereichs ausgebildeten Betätigungselements ist eine Betätigungsbewegung des Betätigungselements erzielbar, welche das Eingriffselement von der Eingriffslage gegen die Freigabelage bewegbar macht. Es hat sich gezeigt, dass die Freigabelage nicht bei jeder Betätigung des Betätigungselementes sicher erzielt wird, so dass der Pfosten fallweise erst nach mehreren Betätigungsversuchen aus der Pfostenaufnahme herausgezogen werden kann.

Die erfindungsgemässe Aufgabe besteht nun darin eine Lösung zu finden, welche eine störungsfreie Handhabung des Schutzgeländerhalters ermöglicht.

Diese Aufgabe wird durch einen Schutzgeländerhalter mit den Merkmalen des Anspruchs 1 gelöst. Die abhängigen Ansprüche beschreiben vorteilhafte Ausführungsvarianten, welche weitere Aufgaben lösen.

Ein erfindungsgemässer Schutzgeländerhalter zum Halten von Absperrelementen umfasst einen Pfosten, der sich zwischen einem unteren und einem oberen Ende erstreckt. Der Pfosten umfasst beim unteren Ende einen Einsteckbereich zum Einsetzen in das Innere einer Pfostenaufnahme, beim Einsteckbereich ein relativ zum Pfosten bewegbares Eingriffselement und oberhalb des Einsteckbereichs ein relativ zum Pfosten bewegbares Betätigungselement. Das Eingriffselement ist zwischen einer vorstehenden Eingriffslage mit dessen Eingriff in eine Ausnehmung der Pfostenaufnahme und einer zurückgezogenen Freigabelage ohne Eingriff in die Ausnehmung bewegbar. Eine durch Betätigung des Betätigungselements erzielbare Betätigungsbewegung des Betätigungselements macht das Eingriffselement von der Eingriffslage in die Freigabelage bewegbar. Die Bewegbarkeit des Eingriffselements ist von einer Eingriffsführung vorgegeben ist und die Bewegbarkeit des Betätigungselements von einer Betätigungsführung. Die Eingriffsführung ist von der Betätigungsführung getrennt ausgebildet und eine Kopplungsvorrichtung macht die Betätigungsbewegung auf die Bewegung des Eingriffselements von der Eingriffslage in die Freigabelage übertragbar. Vorzugsweise sind die Eingriffsführung und die Betätigungsführung je am Pfosten angeordnet und/oder daran ausgebildet.

Ein erfindungsgemässer Schutzgeländerhalter gewährleistet aufgrund der voneinander getrennten Führungen für die Bewegbarkeit des Eingriffselements und für die Bewegbarkeit des Betätigungselements und der Kopplungsvorrichtung eine störungsfreie Handhabung des Schutzgeländerhalters.

Vorzugsweise ist das Betätigungselement näher beim oberen Ende als beim unteren Ende des Pfostens angeordnet. Damit wird gegenüber den Lösungen des Standes der Technik der wichtige Vorteil erzielt, dass sich eine Person zum Betätigen des Betätigungselementes nicht bücken muss.

Bei einer besonders einfach handhabbaren Ausführungsform weist das Eingriffselement am vom Pfosten vorstehenden Ende eine Einschnappfläche und eine Rückhaltefläche auf. Die Einschnappfläche verläuft gegen das untere Ende des Pfostens hin unter einem spitzen Winkel gegen den Pfosten. Beim Einsetzen des Einsteckbereichs in das Innere der Pfostenaufnahme wird das Eingriffselement im Kontakt der Einschnappfläche zur Pfostenaufnahme in die Freigabelage bewegt ohne dass dazu eine Betätigung des Betätigungselements nötig ist. Die Rückhaltefläche verläuft gegen das obere Ende des Pfostens hin im Wesentlichen rechtwinklig gegen den Pfosten, so dass sie in der Eingriffslage durch das Anstehen an der Ausnehmung ein Entfernen des Pfostens aus der Pfostenaufnahme verhindert.

Bei einer weiteren vorteilhaften Ausführungsform ist das Eingriffselement bei unbetätigtem Betätigungselement von einer Vorspanneinrichtung in die Eingriffslage bewegbar, wobei die Vorspanneinrichtung vorzugsweise bei der Eingriffsführung und/oder bei der Betätigungsführung eine Federeinrichtung umfasst.

Besonders vorteilhaft sind Ausführungen bei denen der Pfosten rohrförmig ist, die Eingriffsführung und die Betätigungsführung im Innern des Pfostens angeordnet sind und das Eingriffselement und das Betätigungselement in der Eingriffslage des Eingriffselements vom Innern des Pfostens durch Löcher im rohrförmigen Pfosten aus diesem vorstehen. Die Anordnung im Innern des Pfostens schützt die Eingriffsführung und die Betätigungsführung vor Beschädigungen oder Verschmutzungen, welche die Funktion beeinträchtigen würden. Vorzugsweise ist auch die Kopplungsvorrichtung im Innern des Pfostens angeordnet, so dass auch die Übertragung der Betätigungsbewegung auf die Bewegung des Eingriffselements von der Eingriffslage in die Freigabelage vor Beeinträchtigungen geschützt ist. Vorzugsweise umfasst die Eingriffsführung einen um eine Eingriffsschwenkachse schwenkbaren Eingriffshebel mit dem Eingriffselement und die Betätigungsführung einen um eine Betätigungsschwenkachse schwenkbaren Betätigungshebel mit dem Betätigungselement. Bei dieser Ausführung überträgt die Kopplungsvorrichtung die Bewegung des Betätigungsshebels auf die Bewegung des Eingriffshebels.

Bei Ausführungen mit einem Eingriffshebel und einem Betätigungshebel ist es zweckmässig, wenn die Schwenkachsen des Eingriffshebels und des Betätigungshebels je durch zwei Noppen des Eingriffshebels bzw. des Betätigungshebels verlaufen, wobei die Noppen auf zwei voneinander abgewandten Seiten des Eingriffshebels bzw. des Betätigungshebels federnd von diesem vorstehen und in Löcher des Pfostens federnd einrastbar sind.

Wenn der Betätigungshebel, der Eingriffshebel und die Kopplungsvorrichtung eine Einheit bilden, kann diese so ausgebildet werden, dass sie problemlos in den Pfosten einführbar ist. Dazu weisen die Noppen des Betätigungshebels und des Eingriffshebels je am vorstehenden Ende eine Einschnappfläche auf. Die Einschnappfläche verläuft relativ zum Pfosten unter einem spitzen Winkel und bewegt beim Einsetzen der Einheit in den Pfosten die federnd vorstehenden Noppen gegen das Innere des Pfostens. Wenn die Noppen auf die ihnen zugeordneten Löcher des Pfostens treffen, rasten sie federnd in die Löcher ein und die Einheit ist so im Pfosten positioniert, dass das Eingriffselement und das Betätigungselement bei den diesen zugeordneten Löchern im rohrförmigen Pfosten positioniert sind.

Bei einer weiteren vorteilhaften Ausführungsform umfasst der Eingriffshebel und/oder der Betätigungshebel ein Federelement, welches am Pfosten so abgestützt wird, dass das Eingriffselement in der Eingriffslage und das Betätigungselement betätigbar ist.

Wenn die Eingriffsführung einen um eine Eingriffsschwenkachse schwenkbaren Eingriffshebel mit dem Eingriffselement und die Betätigungsführung einen um eine Betätigungsschwenkachse schwenkbaren Betätigungshebel mit dem Betätigungselement umfasst und diese beiden Führungen beidseits federnd vorstehende Noppen, am Pfosten abgestützte Federelemente und Anschlussbereiche für die Kopplungsvorrichtung aufweisen, so können sie je einteilig ausgebildet werden. Insbesondere werden sie als Spritzgussteile ausgebildet.

Vorzugsweise umfasst die Kopplungsvorrichtung einen Stab, welcher an einem seiner beiden Enden über ein erstes Schwenklager schwenkbar mit dem Eingriffshebel und am anderen Ende über ein zweites Schwenklager schwenkbar mit dem Betätigungshebel verbunden ist, wobei eine die beiden Schwenklager verbindende Linie von der Ebene mit der Eingriffsschwenkachse und der Betätigungsschwenkachse beabstandet ist.

Besonders vorteilhaft ist eine Ausführungsform, bei der die einteilige Eingriffsführung über das erstes Schwenklager, die stabförmige Kopplungsvorrichtung und das zweite Schwenklager mit der einteiligen Betätigungsführung verbunden ist. Eine so aufgebaute Einheit ist einfach in den Pfosten einführbar und dort richtig positionierbar.

Ein vorteilhafter Schutzgeländerhalter umfasst einen sich entlang einer Pfostenachse erstreckenden Pfosten und Halteelemente zum Halten von Absperrelementen, wobei die Halteelmente in einer ersten Richtung quer zur Pfostenachse vom Pfosten vorstehen. Damit das Betätigungselement weder durch ein an einem Halteelement angeordnetes Absperrelement noch durch einen unbeabsichtigten Kontakt zu einem Gegenstand oder zu einer Person betätigt wird, steht das Betätigungselement in einer zweiten Richtung vom Pfosten vor, wobei die zweite Richtung quer, vorzugsweise orthogonal, zur ersten Richtung verläuft.

Anhand einiger Figuren wird die Erfindung im Folgenden näher beschrieben. Dabei zeigen
- Fig. 1: eine perspektivische Darstellung eines Schutzgeländerhalters,
- Fig. 2: eine Seitenansicht eines Schutzgeländerhalters,
- Fig. 3: einen Längsschnitt durch den Pfosten eines Schutzgeländerhalters,
- Fig. 4: eine Seitenansicht eines zum Schwenken lagerbaren Betätigungshebels mit Betätigungselement und Federelement,
- Fig. 5: eine Seitenansicht eines zum Schwenken lagerbaren Eingriffshebels mit Eingriffselement und Federelement,
- Fig. 6: eine Seitenansicht eines Stabes der Kopplungsvorrichtung
- Fig. 7: eine perspektivische Darstellung eines zum Schwenken lagerbaren Betätigungshebels mit Betätigungselement und Federelement,
- Fig. 8: eine perspektivische Darstellung eines zum Schwenken lagerbaren Eingriffshebels mit Eingriffselement und Federelement,

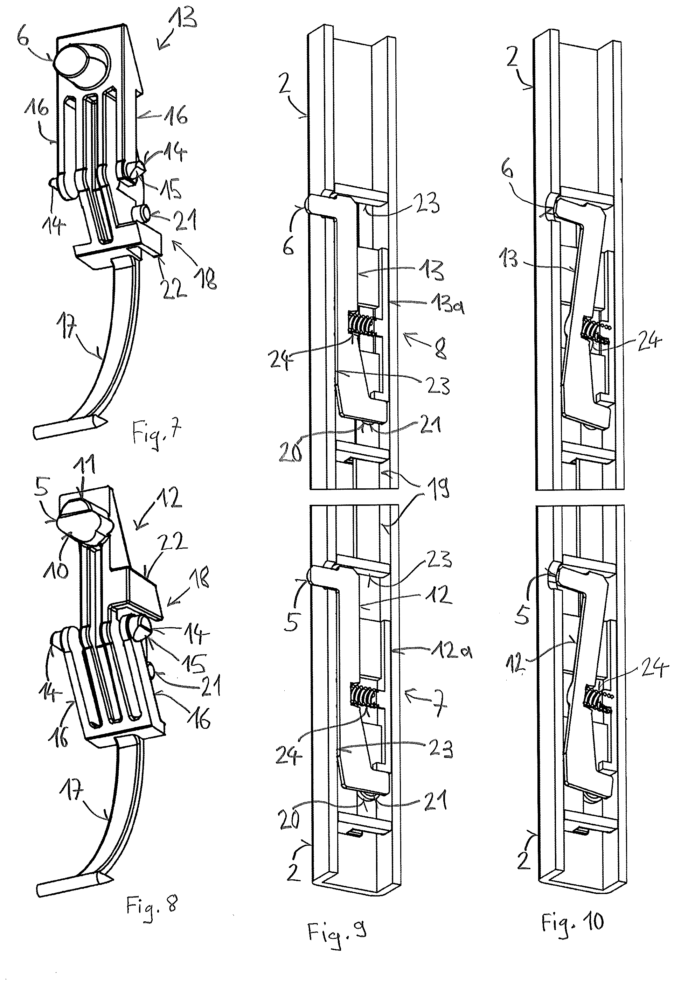

- Fig. 7: eine perspektivische Schnittdarstellung von zwei Abschnitten eines Pfostens mit vorstehendem Betätigungselement und Eingriffselement und
- Fig. 8: eine perspektivische Schnittdarstellung von zwei Abschnitten eines Pfostens mit maximal in den Pfosten gedrücktem Betätigungselement und Eingriffselement in Freigabelage.

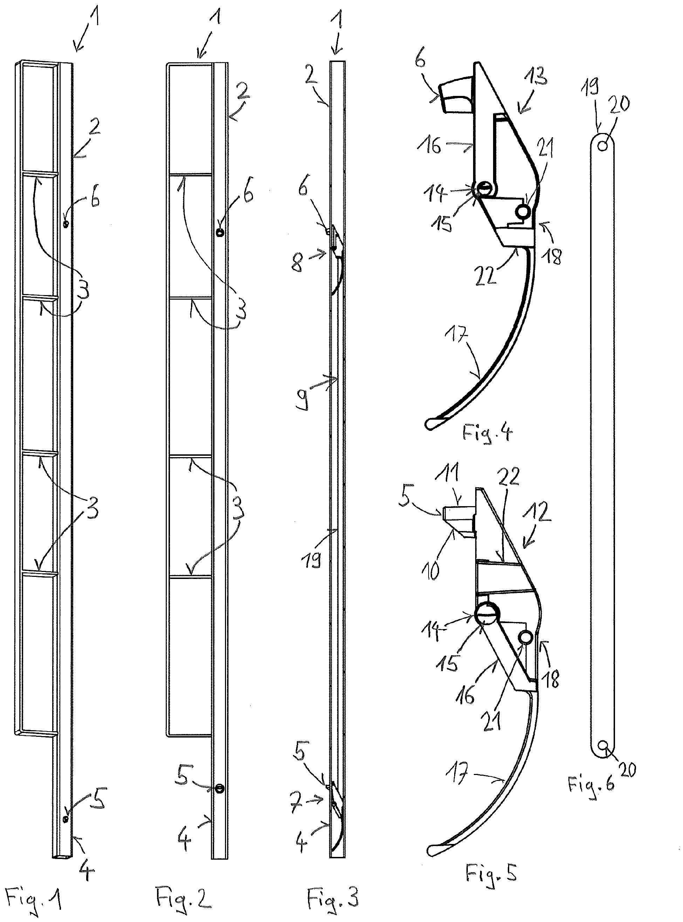

Die Figuren 1 bis 3 zeigen einen Schutzgeländerhalter 1 mit einem sich entlang einer Pfostenachse erstreckt Pfosten 2 und mit Halteelementen 3 zum Halten von Absperrelementen. Die Halteelemente 3 stehen in einer ersten Richtung quer zur Pfostenachse vom Pfosten 2 vor und umschliessen rechteckige Aufnahmeöffnungen, von denen beispielsweise Absperrelemente in der Form von Brettern gehalten werden können. Der Pfosten 2 erstreckt sich zwischen einem unteren und einem oberen Ende und umfasst beim unteren Ende einen Einsteckbereich 4 zum Einsetzen in das Innere einer Pfostenaufnahme. Im Bereich des Einsteckbereichs 4 befindet sich ein relativ zum Pfosten 2 bewegbares Eingriffselement 5 und in der oberen Hälfte des Pfostens 2 befindet sich ein relativ zum Pfosten 2 bewegbares Betätigungselement 6.

Das Eingriffselement 5 ist zwischen einer vorstehenden Eingriffslage mit dessen Eingriff in eine Ausnehmung der Pfostenaufnahme und einer zurückgezogenen Freigabelage ohne Eingriff in die Ausnehmung bewegbar. Eine durch Betätigung des Betätigungselements 6 erzielbare Betätigungsbewegung des Betätigungselements 6 macht das Eingriffselement 5 von der Eingriffslage in die Freigabelage bewegbar. Die Bewegbarkeit des Eingriffselements 5 ist von einer Eingriffsführung 7 vorgegeben und die Bewegbarkeit des Betätigungselements 6 von einer Betätigungsführung 8. Die Eingriffsführung 7 ist von der Betätigungsführung 8 getrennt ausgebildet, wobei eine Kopplungsvorrichtung 9 die Betätigungsbewegung auf die Bewegung des Eingriffselements 5 von der Eingriffslage in die Freigabelage übertragbar macht. Vorzugsweise sind die Eingriffsführung 7 und die Betätigungsführung 8 je am Pfosten 2 angeordnet und/oder daran ausgebildet.

Der Pfosten 2 ist rohrförmig, die Eingriffsführung 7 und die Betätigungsführung 8 sind im Innern des Pfostens 2 an diesem befestigt. Das Eingriffselement 5 und das Betätigungselement 6 stehen in der Eingriffslage des Eingriffselements 5 vom Innern des Pfostens 2 durch Löcher im rohrförmigen Pfosten 2 aus diesem vor. Auch die Kopplungsvorrichtung 9 ist im Innern des Pfostens 2 angeordnet.

Damit das Betätigungselement 6 weder durch ein an einem Halteelement 3 angeordnetes Absperrelement noch durch einen unbeabsichtigten Kontakt zu einem Gegenstand oder zu einer Person betätigt wird, steht das Betätigungselement 6 in einer zweiten Richtung vom Pfosten 2 vor. Die zweite Richtung verläuft quer, vorzugsweise orthogonal, zur ersten Richtung, in welcher die Halteelemente vorstehen.

Gemäss Fig. 5 weist das Eingriffselement 5 am vom Pfosten 2 vorstehenden Ende eine Einschnappfläche 10 und eine Rückhaltefläche 11 auf. Die Einschnappfläche 10 verläuft gegen das untere Ende des Pfostens 2 hin unter einem spitzen Winkel gegen den Pfosten 2. Beim Einsetzen des Einsteckbereichs 4 in das Innere einer Pfostenaufnahme wird das Eingriffselement 5 im Kontakt der Einschnappfläche 10 zur Pfostenaufnahme in die Freigabelage bewegt, ohne dass dazu eine Betätigung des Betätigungselements 6 nötig ist. Die Rückhaltefläche 11 verläuft gegen das obere Ende des Pfostens 2 hin im Wesentlichen rechtwinklig gegen den Pfosten 2, so dass sie in der Eingriffslage durch das Anstehen an der Ausnehmung ein Entfernen des Pfostens 2 aus der Pfostenaufnahme verhindert.

Die anhand der Figuren 3, 5 und 8 gezeigte Eingriffsführung 7 umfasst einen um eine Eingriffsschwenkachse schwenkbaren Eingriffshebel 12 mit dem Eingriffselement 5 und die anhand der Figuren 3, 4 und 7 gezeigte Betätigungsführung 8 umfasst einen um eine Betätigungsschwenkachse schwenkbaren Betätigungshebel 13 mit dem Betätigungselement 6. Bei dieser Ausführung überträgt die Kopplungsvorrichtung 9 die Bewegung des Betätigungshebels 13 auf die Bewegung des Eingriffshebels 12. Die Schwenkachsen des Eingriffshebels 12 und des Betätigungshebels 13 verlaufen je durch zwei Noppen 14 des Eingriffshebels 12 bzw. des Betätigungshebels 13, wobei die Noppen 14 auf zwei voneinander abgewandten Seiten des Eingriffshebels 12 bzw. des Betätigungshebels 13 federnd von diesem vorstehen und in Löcher des Pfostens 2 federnd einrastbar sind.

Wenn die in den Fig. 3 bis 8 dargestellten Elemente, nämlich der Betätigungshebel 13, der Eingriffshebel 12 und die Kopplungsvorrichtung 9 eine Einheit bilden, kann diese in den Pfosten 2 eingeführt werden. Dazu weisen die Noppen 14 des Betätigungshebels 13 und des Eingriffshebels 12 je am vorstehenden Ende eine Einschnappfläche 15 auf. Die Einschnappfläche 15 verläuft relativ zum Pfosten 2 unter einem spitzen Winkel und bewegt beim Einsetzen der Einheit in den Pfosten die federnd vorstehenden Noppen 14 gegen das Innere des Pfostens 2. Damit die Noppen 14 die gewünschte Federeigenschaft erhalten, sind sie am Ende von seitlichen Federarmen 16 ausgebildet. Wenn die Noppen 14 auf die ihnen zugeordneten Löcher des Pfostens 2 treffen, rasten sie federnd in die Löcher ein und die Einheit ist so im Pfosten 2 positioniert, dass das Eingriffselement 5 und das Betätigungselement 6 bei den diesen zugeordneten Löchern im rohrförmigen Pfosten 2 positioniert sind.

Gemäss den Figuren 4, 5, 7 und 8 umfasst der Eingriffshebel 12 und der Betätigungshebel 13 ein Federelement 17, welches innen am Pfosten 2 so abgestützt wird, dass das Eingriffselement 5 in der Eingriffslage und das Betätigungselement 6 betätigbar ist. Die Eingriffsführung 7 mit dem um eine Eingriffsschwenkachse schwenkbaren Eingriffshebel 12 und die Betätigungsführung 8 mit dem um eine Betätigungsschwenkachse schwenkbaren Betätigungshebel 13 sind mit den je beidseits angeordneten Noppen 14, den am Pfosten 2 abstützbaren Federelementen 17 und Anschlussbereichen 18 für die Kopplungsvorrichtung 9 je einteilig ausgebildet. Vorzugsweise sind sie als Spritzgussteile ausgebildet.

Die Kopplungsvorrichtung 9 umfasst einen Stab 19, welcher an seinen beiden Enden über erste Schwenklagerelemente 20 schwenkbar mit zweiten Schwenklagerelementen 21 des Eingriffshebel 12 bzw. des Betätigungshebels 13 verbunden ist. Die Verbindungen der ersten mit dem zweiten Schwenklagerelementen 20, 21 bilden je ein Schwenklager. Damit die Kopplungsvorrichtung 9 eine Schwenkbewegung des Betätigungshebels 13 gut auf den Eingriffshebel 12 übertragen kann, ist die Linie, welche die beiden Schwenklager verbindet von der Ebene mit der Eingriffsschwenkachse und der Betätigungsschwenkachse beabstandet.

Der Stab 19 wird von Haltestegen 22 des Betätigungshebels 13 und des Eingriffshebels 12 an den zweiten Schwenklagerelementen 21 gehalten, so dass der Betätigungshebel 13, der Eingriffshebel 12 und der Stab 19 eine Einheit bilden. Diese Einheit ist einfach in den Pfosten 2 einführbar und dort richtig positionierbar.

Die Figuren 9 und 10 zeigen eine Ausführungsform, bei welcher die Eingriffsführung 7 und die Betätigungsführung 8 mehrteilig ausgeführt sind. Der Eingriffshebel 12 und der Betätigungshebel 13 sind je in einem Eingriffsgehäuse 12a bzw. einem Betätigungsgehäuse 13a angeordnet, wobei Führungselemente 23 des Pfostens 2 und des Eingriffsgehäuses 12a bzw. des Betätigungsgehäuses 13a die Bewegungen des Eingriffshebels 12 bzw. des Betätigungshebels 13 einschränken. Im Eingriffsgehäuse 12a bzw. im Betätigungsgehäuse 13a drücken Federn 24 den Eingriffshebel 12 bzw. den Betätigungshebel 13 gegen eine Lage, bei der das Eingriffselement 5 bzw. das Betätigungselement 6 aus dem Pfosten 2 vorstehen. Das Zusammenspiel des Eingriffshebels 12 bzw. des Betätigungshebels 13 mit den bewegungsbegrenzenden Führungselementen 23 und den Federn 24 bildet die Eingriffsführung 7 bzw. die Betätigungsführung 8.

Die Kopplungsvorrichtung 9 umfasst am Eingriffshebel 12 bzw. am Betätigungshebel 13 je zweite Schwenklagerelemente 21, den Stab 19 und die an den beiden Enden des Stabs 19 angeordneten ersten Schwenklagerelementen 20. Der Stab 19 ist im Eingriffsgehäuse 12a bzw. im Betätigungsgehäuse 13a bewegbar gelagert. Eine Einheit bestehend aus dem Eingriffsgehäuse 12a mit Feder 24 und Eingriffshebel 12, Betätigungsgehäuse 13a mit Feder 24 und Betätigungshebel 13 sowie mit dem Stab 19 muss so weit in den Pfosten 2 geschoben werden, bis das Eingriffselement 5 und das Betätigungselement 6 durch Öffnungen aus dem Pfosten 2 vorstehen können. In dieser Position wird das Eingriffsgehäuse 12a und/oder das Betätigungsgehäuse 13a am Pfosten befestigt. Wenn, wie in der Figur 10 dargestellt, das Betätigungselement 6 in den Pfosten gedrückt ist, so sind die Federn 24 komprimiert und das Eingriffselement 5 ist in der Freigabelage.

## Patentansprüche

1. Schutzgeländerhalter (1) zum Halten von Absperrelementen, mit einem Pfosten (2), der sich zwischen einem unteren und einem oberen Ende erstreckt, der beim unteren Ende einen Einsteckbereich (4) zum Einsetzen in das Innere einer Pfostenaufnahme aufweist und der beim Einsteckbereich (4) ein relativ zum Pfosten (2) bewegbares Eingriffselement (5) und oberhalb des Einsteckbereichs (4) ein relativ zum Pfosten (2) bewegbares Betätigungselement (6) aufweist, wobei das Eingriffselement (5) zwischen einer vorstehenden Eingriffslage mit dessen Eingriff in eine Ausnehmung der Pfostenaufnahme und einer zurückgezogenen Freigabelage ohne Eingriff in die Ausnehmung bewegbar ist und eine durch Betätigung des Betätigungselements (6) erzielbare Betätigungsbewegung des Betätigungselements (6) das Eingriffselement (5) von der Eingriffslage in die Freigabelage bewegbar macht, **dadurch gekennzeichnet, dass** die Bewegbarkeit des Eingriffselements (5) von einer Eingriffsführung (7) vorgegeben ist und die Bewegbarkeit des Betätigungselements (6) von einer Betätigungsführung (8), wobei die Eingriffsführung (7) von der Betätigungsführung (8) getrennt ist und eine Kopplungsvorrichtung (9) die Betätigungsbewegung auf die Bewegung des Eingriffselements (5) von der Eingriffslage in die Freigabelage übertragbar macht.

2. Schutzgeländerhalter (1) nach Anspruch 1, **dadurch gekennzeichnet, dass** das Betätigungselement (6) näher beim oberen Ende als beim unteren Ende des Pfostens (2) angeordnet ist.

3. Schutzgeländerhalter (1) nach Anspruch 1 oder 2, **dadurch gekennzeichnet, dass** das Eingriffselement (5) am vom Pfosten (2) vorstehenden Ende eine Einschnappfläche (10) und eine Rückhaltefläche (11) aufweist, wobei die Einschnappfläche (10) gegen das untere Ende des Pfostens (2) hin unter einem spitzen Winkel gegen den Pfosten (2) verläuft und beim Einsetzen des Einsteckbereichs (4) in das Innere der Pfostenaufnahme im Kontakt zur Pfostenaufnahme das Eingriffselement (5) in die Freigabelage bewegt und die Rückhaltefläche (11) gegen das obere Ende des Pfostens (2) hin im Wesentlichen rechtwinklig gegen den Pfosten (2) verläuft und in der Eingriffslage durch das Anstehen an der Ausnehmung ein Entfernen des Pfostens (2) aus der Pfostenaufnahme verhindert.

4. Schutzgeländerhalter (1) nach einem der Ansprüche 1 bis 3, **dadurch gekennzeichnet, dass** das Eingriffselement (5) bei unbetätigtem Betätigungselement (6) von einer Vorspanneinrichtung in die Eingriffslage bewegbar ist, wobei die Vorspanneinrichtung vorzugsweise bei der Eingriffsführung (7) und/oder bei der Betätigungsführung (8) eine Federeinrichtung umfasst.

5. Schutzgeländerhalter (1) nach einem der Ansprüche 1 bis 4, **dadurch gekennzeichnet, dass** der Pfosten (2) rohrförmig ist, die Eingriffsführung (7) und die Betätigungsführung (8) im Innern des Pfostens (2) angeordnet sind und das Eingriffselement (5) und das Betätigungselement (6) in der Eingriffslage des Eingriffselements (5) vom Innern des Pfostens (2) durch Löcher im rohrförmigen Pfosten (2) aus diesem vorstehen.

6. Schutzgeländerhalter (1) nach einem der Ansprüche 1 bis 5, **dadurch gekennzeichnet, dass** die Eingriffsführung (7) einen um eine Eingriffsschwenkachse schwenkbaren Eingriffshebel (12) mit dem Eingriffselement (5) umfasst, die Betätigungsführung (8) einen um eine Betätigungsschwenkachse schwenkbaren Betätigungshebel (13) mit dem Betätigungselement (6) umfasst und die Kopplungsvorrichtung (9) die Bewegung des Betätigungshebels (13) auf die Bewegung des Eingriffshebels (12) überträgt.

7. Schutzgeländerhalter (1) nach Anspruch 6, **dadurch gekennzeichnet, dass** die Schwenkachsen des Eingriffshebels (12) und des Betätigungshebels (13) je durch zwei Noppen (14) des Eingriffshebels (12) bzw. des Betätigungshebels (13) verlaufen, wobei die Noppen (14) auf zwei voneinander abgewandten Seiten des Eingriffshebels (12) bzw. des Betätigungshebels (13) federnd von diesem vorstehen und in Löcher des Pfostens (2) federnd einrastbar sind.

8. Schutzgeländerhalter (1) nach Anspruch 7, **dadurch gekennzeichnet, dass** der Betätigungshebel (13), der Eingriffshebel (12) und die Kopplungsvorrichtung (9) eine Einheit bilden, welche in den Pfosten (2) einführbar ist, wobei die Noppen (14) des Betätigungshebels (13) und des Eingriffshebels (12) je am vorstehenden Ende eine Einschnappfläche (15) aufweisen, wobei die Einschnappfläche (15) relativ zum Pfosten (2) unter einem spitzen Winkel verläuft und beim Einsetzen der Einheit in den Pfosten (2) die federnd vorstehenden Noppen (14) gegen das Innere des Pfostens (2) bewegt.

9. Schutzgeländerhalter (1) nach einem der Ansprüche 6 bis 8, **dadurch gekennzeichnet, dass** der Eingriffshebel (12) und/oder der Betätigungshebel (13) ein Federelement (17) umfasst, welches am Pfosten (2) abgestützt ist.

10. Schutzgeländerhalter (1) nach einem der Ansprüche 6 bis 9, **dadurch gekennzeichnet, dass** die Kopplungsvorrichtung (9) einen Stab (19) umfasst, welcher an einem seiner beiden Enden über ein erstes Schwenklager (20, 21) schwenkbar mit dem Eingriffshebel (12) und am anderen Ende über ein zweites Schwenklager (20, 21) schwenkbar mit dem Betätigungshebel (13) verbunden ist, wobei eine die beiden Schwenklager verbindende Linie von der Ebene mit der Eingriffsschwenkachse und der Betätigungsschwenkachse beabstandet ist.
